# EUROPEAN PATENT SPECIFICATION

(11) **EP 3 292 176 B1**
(45) Date of publication and mention of the grant of the patent: **30.01.2019**
(21) Application number: 15778701.1
(22) Date of filing: 05.05.2015
(51) Int. Cl.: C09D 183/06, C08F 22/10, C08G 59/00, G02B 1/04

(54) **UV CURABLE COATING COMPOSITIONS FOR ORGANIC OPHTHALMIC LENSES**
UV-HÄRTBARE BESCHICHTUNGSZUSAMMENSETZUNGEN FÜR ORGANISCHE BRILLENGLÄSER
COMPOSITIONS DE REVÊTEMENT SÉCHANT SOUS UV POUR LENTILLES OPHTALMIQUES ORGANIQUES

(43) Date of publication of application: 14.03.2018
(73) Proprietor: Essilor International, 94220 Charenton-le-Pont (FR)
(72) Inventor: VALERI, Robert, Dallas, TX 75034 (US)
(74) Representative: Cabinet Plasseraud
(86) International application number: PCT/IB2015/001124
(87) International publication number: WO 2016/178052

(56) References cited:
- WO-A1-2012/093995
- WO-A1-2013/103334
- WO-A2-01/18128
- JP-A- 2000 266 905
- JP-A- 2001 288 412
- US-A1- 2007 021 523
- US-A1- 2007 275 171

## Description

### FIELD OF THE INVENTION

This invention relates to abrasion resistant UV curable coating compositions for ophthalmic lenses.

### BACKGROUND

Ophthalmic lenses are often coated with a ultraviolet (UV) curable coating composition that adheres to the lens surface post-curing. The degree of adhesion is contingent upon the chemical nature of both the lens surface and the coating composition, and the degree of adhesion may be measured immediately after cure and after ageing. Adhesion after ageing is examined by a Qsun test which tests lightfastness, colorfastness, and photostability of a coating layer by exposure to UV, visible and infrared (IR) light.

Many ophthalmic lens laboratories apply a UV curable hard coating to the concave side of a lens that has been surfaced to prescription, or to the convex side of a lens when one or more treatments are to be performed on the lens substrate. Because most laboratories typically employ a single spin coating machine for application of UV curable hard coatings, it is desirable to employ a single coating composition that can be used for all lens materials. This hard coating is also used to apply dyes to make sunwear or fashion tints. Therefore, it is also desirable for the single coating to be tintable (able to accept dye) using standard water-based dyes.

UV curable hard coatings for ophthalmic lens applications are typically acrylic-based and exhibit good adhesion to thermoplastic resins such as polycarbonate. Some efforts have been made to formulate UV curable hard coatings that also adhere to thermoset resins such as those based on allyl diglycol carbonate, CR-39®. However, there are currently no UV curable compositions that exhibit robust adhesion to all ophthalmic lens substrates, including the higher index thiourethane based thermoset resins such as 1.60 (e.g. MR-8®), 1.67 (e.g. MR-7®), and 1.74 (e.g. MR-1.74®).

Some ophthalmic lenses are composite lenses, which have a front face made of a material that is different from the back face material. Depending on the chemical nature of the front and rear faces, a composite lens may have front and rear faces with different adhesive properties. On such lenses, a UV curable hard coat may not adhere to both faces.

There exist several UV curable formulations that exhibit good adhesion to both thermoplastic, *e.g.,* polycarbonate, and thermoset resins, *e.g.,* CR-39®. However, these coatings do not exhibit robust adhesion to the thiourethane based thermoset resins 1.60 (MR-8®), 1.67 (MR-7®), or 1.74 (MR-1.74®). See Essilor application WO2013103334.

Improvement of adhesion after ageing is disclosed in WO2007114808. UV absorbers may be included in the curable compositions to avoid degradation upon UV ageing. However, these compositions are heat-cured and contain blocked isocyanate, which may be used only in a heat cure process.

US2012262664 discloses UV cured acrylic hard coats, without any silanes, for ophthalmic applications in which unsaturated UV absorbers are used. Due to their unsaturation, the UV absorbers are not only solubilized, but become chemically linked in the thermoset polymer. The UV absorbers are intended to improve adhesion, however, only polycarbonate is employed as a substrate. In the case of UV absorbers that are not unsaturated, *i.e.* not linked chemically, adhesion is not improved.

US2005282945 discloses UV cured hard coats for ophthalmic lenses in which a UV absorber is eventually added. Adhesion is only evaluated on a polyethylene terethalate (PET) substrate, but no relationship between UV absorber and adhesive performance is established.

These references fail to teach that adding a soluble UV absorber in UV-cured compositions improve adhesion on a range of substrates. There is a need in the industry for a single coating formulation that exhibits robust adhesion to all thermoplastic and thermoset resins, including the high index thiourethane-based thermoset resins

Documents WO 01/18128 and US 2007/021523 relate to transparent coatings for objects such as eyeglass lenses and disclose compositions comprising Glymo, a polyacrylate monomer and a mixture comprising benzophenone.

### SUMMARY

An aim of the present invention is to provide UV curable coating compositions that exhibit robust adhesion to all organic ophthalmic lens substrates. In a particular embodiment of the present invention, the resultant coating is an abrasion-resistant coating.

In some aspects of the invention, a UV curable coating composition for ophthalmic lenses comprises at least one epoxy alkoxysilane, at least one polyfunctional acrylate monomer and/or polyfunctional epoxy compound which is different from the at least one epoxysilane, and at least one UV absorber. In a further aspect, the at least one epoxy alkoxysilane is a non-hydrolyzed epoxy alkoxysilane. In some embodiments, cationic and/or free radical photoinitators are added to the alkoxysilane/acrylate composition.

In some embodiments, the UV curable coating composition comprises a total UV absorber amount that is 2 wt. % or more of total dry matter of the composition. In some embodiments, the total amount of UV absorber ranges from 3 to 10 wt. % of the total dry matter of the composition. In a further embodiment, the total amount of UV absorber ranges from 3 to 6 wt. % of the total dry matter of the composition. In some embodiments, the total amount of UV absorber is 1, 2, 3, 4, 5, 6, 7, 8, 9, or 10 wt. % of the total dry matter of the composition, or any range therein.

In some aspects, the invention provides a UV curable coating composition with at least one epoxy alkoxysilane in an amount ranging from 3 to 58 wt. % of total dry matter of the composition, more preferably from 4 to 50 weight%, even more preferably from 5 to 40 weight% relative to the total dry matter of the composition. In some embodiments, the total amount of at least one epoxy alkoxysilane is 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, or 58 wt. % of the total dry matter of the composition, or any range therein. In some aspects, the invention provides a UV curable coating composition with at least one polyfunctional acrylate monomer and/or polyfunctional epoxy compound, which is different from the at least one epoxy alkoxysilane, in a total amount of 40 wt. % or more, preferably from 40 to 70 weight%, relative to the total dry matter of the composition. In some embodiments, the total amount of at least one polyfunctional acrylate monomer and/or polyfunctional epoxy compound, which is different from the at least one epoxy alkoxysilane, is 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, or 58 wt. % of the total dry matter of the composition, or any range therein. In a particular embodiment, the curable composition comprises from 0 to 80 weight %, preferably from 25 to 70 weight %, more preferably from 30 to 60 weight % of at least one polyfunctional acrylate monomer and from 0 to 40 weight %, preferably from 2 to 30 weight%, more preferably from 5 to 25 weight% of at least one polyfunctional epoxy compound, relative to the total dry matter of the composition, provided that the total amount of polyfunctional acrylate monomers and/or polyfunctional epoxy compounds is more than 40 weight %.

In a further aspect of the invention, the UV curable coating composition comprises a silane without epoxy function, such as a vinylalkoxysilane. These alkoxysilanes are preferably selected from the group consisting of dialkyl-dialkoxysilanes, alkyl-trialkoxysilanes, alkenyl-trialkoxysilanes and mixtures thereof. In a particular embodiment, the vinylalkoxysilane is vinyltrimethoxysilane. Silanes without epoxy function can be used as substitutes for epoxy alkoxysilanes, but only as partial substitute. The weight ratio of epoxy alkoxysilane over non-epoxy silane (in particular over non-epoxy alkoxy silane) is defined as silane ratio. Epoxy alkoxysilanes are required in the invention to obtain a good dry adhesion, in an amount larger than 3 weight %, preferably larger than 4 weight %, more preferably larger than 5 weight %, relative to the total dry matter of the composition. In addition, to obtain a good adhesion after tinting, epoxy alkoxysilanes are required in an amount larger than 15 weight % relative to the total dry matter of the composition. In some embodiments, the UV curable coating composition comprises a molar ratio of total amount of epoxy functional groups to total amount of acrylate functional groups ranging from 0.1 to 3, more preferably from 0.2 to 2, even more preferably from 0.3 to 1. In some embodiments, the UV curable coating composition comprises a molar ratio of total amount of epoxy functional groups to total amount of acrylate functional groups of 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3, or any range therein. In some embodiments, the coating composition comprises functionalized SiO₂. The incorporation of functionalized SiO₂ may increase scratch and abrasion resistance.

Colloidal silica particles may be added to the coating composition in an amount of up to 50 weight %, preferably from 5 to 30 weight %, relative to the total dry matter of the composition. In some embodiments, colloidal silica particles may be added to the coating composition in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 wt. % relative the total dry matter of the composition, or any range therein. An exemplary colloidal silica copmrises 50% SiO₂ in trimethylolpropane triacrylate (TMPTA). Addition of colloidal silica results in enhanced abrasion resistance.

The curable composition as disclosed herein advantageously further comprises small amounts, preferably from 0.05 to 1.5 % by weight, more preferably 0.1 to 1 % by weight, of at least one surfactant. In some embodiments, the UV curable coating composition comprises surfactant in an amount of 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.5, 0.51, 0.52, 0.53, 0.53, 0.54, 0.55, 0.56, 0.57, 0.58, 0.59, 0.6, 0.61, 0.62, 0.63, 0.64, 0.65, 0.66, 0.67, 0.68, 0.69, 0.7, 0.71, 0.72, 0.73, 0.74, 0.75, 0.76, 0.77, 0.78, 0.79, 0.8, 0.81, 0.82, 0.83, 0.84, 0.85, 0.86, 0.87, 0.88, 0.89, 0.9, 0.91, 0.92, 0.93, 0.94, 0.95, 0.96, 0.97, 0.98, 0.99, 1.0, 1.01. 1.02. 1.03. 1.04. 1.05, 1.06, 1.07, 1.08, 1.09, 1.1, 1.11. 1.12. 1.13. 1.14. 1.15, 1.16, 1.17, 1.18, 1.19, 1.2, 1.21. 1.22. 1.23. 1.24. 1.25, 1.26, 1.27, 1.28, 1.29, 1.3, 1.31. 1.32. 1.33. 1.34. 1.35, 1.36, 1.37, 1.38, 1.39, 1.4, 1.41. 1.42. 1.43. 1.44. 1.45, 1.46, 1.47, 1.48, 1.49 or 1.5 wt %, or any range therein. The surfactant is important for good wetting of the substrate resulting in satisfactory cosmetics of the final hard-coating. Said surfactant can include for example poly(alkyleneglycol)-modified polydimethylsiloxanes or polyheptamethylsiloxanes, or fluorocarbon-modified polysiloxanes. The curable composition preferably contain from 0.1 % to 0.3 % of a fluorocarbon-modified polysiloxane, such as the commercial product EFKA ® 3034 sold by Ciba Specialty Chemicals, or the commercial product FC-4434 sold by 3M.

In some cases, for example when the coating composition contains high amounts of colloidal particles, it may be necessary to use an organic solvent to control viscosity or for improving flow properties. The amount of organic solvent(s) preferably does not exceed 30 % by weight of the coating composition. The solvent is for example selected from alcohols, glycol ethers, polyols and mixtures thereof. However, the composition of the present invention is preferably free of solvent so that the coating could be used in coating equipment that circulates the coating after dispensing. This reduces the amount of coating used per lens as only the coating that is cured on the lens is used and the remaining coating that was dispensed is circulated back into the coating reservoir. This also eliminates VOCs and hazardous chemical waste. Some aspects of the invention are directed towards a method for manufacturing a UV-cured hard-coated substrate comprising combining in a mixture at least one epoxy alkoxysilane, at least one polyfunctional acrylate monomer and/or polyfunctional epoxy compound, different from the at least one epoxy alkoxysilane, and curing said coating with UV light. In some embodiments, the at least one epoxy alkoxysilane is a non-hydrolyzed epoxy alkoxysilane. In a particular embodiment, the method does not comprise a hydrolysis step before the UV curing step In some embodiments, cationic and/or free radical photoinitators are added to the alkoxysilane/acrylate composition. The method may comprise a drying step before the curing step, especially in case an organic solvent has been used. In specific embodiments, the method doesn't comprise any step requiring heating, so that the temperature of the substrate is lower than 70°C during all manufacturing steps. In more specific embodiments, temperature of the substrate is lower than 50°C during all manufacturing steps.

After coating and optionally drying, the resulting optical substrate coated with the coating solution is submitted, without any prior hydrolysis step, to irradiation with UV light. The curing step (step (b)) comprises irradiating the coated layer with a UV radiation dosage ranging preferably from 0.150 J/cm² to 1.20 J/cm² in the UV-C range (290nm - 100nm). Irradiation times ranged preferably from about 1 second to 10 seconds. Naturally, it is possible to achieve the same dosage range using a lower intensity bulb for a longer duration. In step (b), the cationic photo initiator and/or free radical photo initiator catalyzes the polymerization of the epoxy functional monomers and the condensation of the alkoxysilane groups. In particular, when triarylsulfonium salt is used, the triarylsulfonium salt will cleave upon photolysis and produce an aryl radical and a diarylsulfonium cation-radical (see J.V. Crivello, D.A. Conlon, and J.L. Lee, "The Synthesis and Characterization of Cationic Photoinitiators Bearing Two and Three Photoactive Triarylsulfonium Groups in the Same Molecule", Polymer Bulletin 14, 279-286 (1985)). The diarylsulfonium cation-radical then generates, in subsequent reactions, strong Bronsted acids which initiate the cationic polymerization (epoxy ring opening) of the epoxy-functional monomers and simultaneously catalyze the hydrolysis and condensation of the alkoxysilane groups (sol-gel process) using atmospheric moisture during the photolysis. The reaction mechanism of diaryliodonium salts is very similar to that of triarylsulfonium salts.

In some aspects of the invention, the UV-cured hard-coated ophthalmic lens comprises a substrate, and a hard coat obtained by UV-curing a composition. In some embodiments, the substrate is an organic, mineral or composite optical substrate. In some embodiments, the substrate comprises a polythiourethane-based polymer. In aspects of the invention, the UV-cured hard-coated ophthalmic lens comprises a main front face and a main rear face. In some embodiments, the main front face and main rear face are made of the same organic, mineral or composite material. In other embodiments, the main front face and main rear face are made of different materials. In a particular embodiment, the main front face and main rear face are made of different organic polymers.

The epoxyalkylalkoxysilanes used in the present invention are preferably selected from glycidyl(C₁-₃ alkyl)-(C₁-₃ alkyl)-di(C₁-₃ alkoxy)silanes and glycidyl(C₁-₃ alkyl)-tri(C₁-₃ alkoxy)silanes. Hydrolysis of the C₁-₃ alkoxy groups releases volatile alcohols (methanol, ethanol, propanol) which are easily evaporated from the curing coating composition. The (epoxy)(alkoxy)silane is advantageously 3-glycidoxypropy-methyldiethoxysilane and/or 3-glycidoxypropyl-trimethoxysilane.

The polyfunctional acrylate monomer may be selected from the group consisting of diacrylate, triacrylate, tetraacrylate and hexaacrylate monomers, such as pentaerythritol triacrylate or pentaerythritol tetraacrylate. In particular, the polyfunctional monomer is preferably selected from the group consisting of 1,4-butanedioldiacrylate, 1,6-hexanedioldiacrylate, dipropyleneglycol diacrylate pentaerythritol triacrylate, pentaerythritol tetraacrylate, dipentaerythritol tetraacrylate, dipentaerythritol hexaacrylate, silicone hexaacrylate, and mixtures thereof. The addition of polyfunctional acrylate monomers may improve adhesion, tinting, scratch resistance and adhesion to thermoplastic substrates.

The polyfunctional epoxy compound may be selected from the group consisting of diglycerol tetraglycidyl ether, dipentaerythritol tetraglycidyl ether, sorbitol polyglycidyl ether, polyglycerol polyglycidyl ether, pentaerythritol polyglycidyl ether such as pentaerythritol tetraglycidyl ether, trimethylolethane triglycidyl ether, trimethylolmethane triglycidyl ether, trimethylolpropane triglycidyl ether, triphenylolmethane triglycidyl ether, trisphenol triglycidyl ether, tetraphenylol ethane triglycidyl ether, tetraglycidyl ether of tetraphenylol ethane, p-aminophenol triglycidyl ether, 1,2,6-hexanetriol triglycidyl ether, glycerol triglycidyl ether, diglycerol triglycidyl ether, glycerol ethoxylate triglycidyl ether, Castor oil triglycidyl ether, propoxylated glycerine triglycidyl ether, ethylene glycol diglycidyl ether, 1,4-butanediol diglycidyl ether, neopentyl glycol diglycidyl ether, cyclohexanedimethanol diglycidyl ether, dipropylene glycol diglycidyl ether, polypropylene glycol diglycidyl ether, dibromoneopentyl glycol diglycidyl ether, hydrogenated bisphenol A diglycidyl ether, (3,4-epoxycyclohexane) methyl 3,4-epoxycylohexylcarboxylate and mixtures thereof. Addition of such polyepoxides improves toughness of the resulting cured coating and and adhesion to thermoset resin substrates.

When polyfunctional acrylate monomers are used in combination with the epoxyalkoxy silane, the coating composition may further comprise at least one free radical photo-initiator, preferably from 1 % to 15 % by weight, more preferably from 1.5 to 10% by weight, relative to the polyfunctional acrylate monomers, of a free radical photoinitiator. Such free radical photo-initiators can be selected for example from haloalkylated aromatic ketones such as chloromethylbenzophenones; some benzoin ethers such as ethyl benzoin ether and isopropyl benzoin ether ; dialkoxyacetophenones such as diethoxyacetophenone and α,α-dimethoxy-α-phenylacetophenone ; hydroxyketones such as (1-[4-(2-hydroxyethoxy)-phenyl]-2-hydroxy-2-methyl-1-propan- 1-one) (Irgacure® 2959 from CIBA), 1-hydroxy-cyclohexyl-phenyl-ketone (Irgacure® 184 from CIBA) and 2-hydroxy-2-methyl-1-phenylpropan-1-one (such as Darocur® 1173 sold by CIBA) ; alpha amino ketones, particularly those containing a benzoyl moiety, otherwise called alpha-amino acetophenones, for example 2-methyl 1-[4-phenyl]-2-morpholinopropan-1-one (Irgacure® 907 from CIBA), (2-benzyl-2-dimethyl amino-1-5 (4-morpholinophenyl)-butan-1-one (Irgacure® 369 from CIBA); monoacyl and bisacyl phosphine oxides and sulphides, such as phenylbis(2,4,6-trimethylbenzoyl)-phosphine oxide (Irgacure® 819 sold by CIBA) ; triacyl phosphine oxides ; liquid photoinitiator blends (such as GENOCURE LTM sold by Rahn USA Corp.) and mixtures thereof. Similarly, polyfunctional epoxy monomers may be used in combination with at least one cationic photoinitiator, which may be selected from triarylsulfonium salts, diaryliodonium salts or mixtures thereof, preferably triarylsulfonium salts. The triarylsulfonium or diaryliodonium salts used in the present invention advantageously have counter-ions of low nucleophilicity and are preferably selected from triarylsulfonium hexafluoroantimonate, triarylsulfonium hexafluorophosphate, diaryliodonium hexafluoroantimonate and diaryliodonium hexafluorophosphate salts. Triarylsulfonium hexafluoroantimonate is available for example from Dow Chemical Company under the trademark CYRACURE™ UVI-6976 (50% by weight in propylene carbonate). Triarylsulfonium hexafluorophosphate is available for example from Dow Chemical Company under the trademark CYRACURE™ UVI-6992 (50% by weight in propylene carbonate). Diaryliodonium hexafluorophosphate is available for example from Ciba Specialty Chemicals, under the reference IRG-250, or from Aldrich under the reference 548014. Diaryliodonium hexafluoroantimonate is available for example from Sartomer Company under the reference SarCat CD 1012. The curable composition according to the invention may comprise preferably at least 1 % by weight, preferably from 1% by weight to 15 % by weight, more preferably from 1.5 % to 10 % by weight, relative to the total dry matter of the composition, of cationic photo initiator.

In some embodiments, the UV absorber comprises a triazole, a triazine, a benzophenone, an oxazole, a thiazole, a metal oxide, a metal dioxide, a salicylate ester, a cinnamate ester, an alkoxycinnamate ester, *p*-aminobenzoic acid, a *p*-aminobenzoate derivative, a sebacate ester, a dibenzoylmethane, a camphor derivative, or a combination thereof. Particularly useful UV absorbers include but are not limited to β-[3-(2*H*-benzotriazole-2-yl)-4-hydroxy-5-*tert-*butylphenyl]-propionic acid poly(ethylene glycol) 300-ester, bis{β-[3-(2*H*-benzotriazole-2-yl)-4-hydroxy-5-*tert*-butylphenyl]-propionic acid}-poly(ethylene glycol) 300-ester (the mixture of the two preceding compounds is sold by CIBA as TINUVIN 1130), zinc oxide, titanium dioxide, para-amino benzoic acid, octyl methoxycinnamate, 2-hydroxy-4-(octyloxy) benzophenone, 2,4-dihydroxy benzophenone, 2,2',4,4'-tetrahydroxy benzophenone, 2-hydroxy-4-methoxy benzophenone, 2-hydroxy-4-methoxybenzophenone-5-sulfonic acid, 2,2'-dihydroxy-4,4'-dimethoxy benzophenone, disodium-2,2'-dihydroxy-4,4'-dimethoxy-5,5'-disulfobenzophenone, 2-(2-hydroxy-5-methyl-phenyl) benzotriazole, 2-(2-hydroxy-3-tertbutyl-5-methylphenyl)-5-chlorobenzotriazole, dibutylhydroxyphenyl chlorobenzotriazole, 2-(2*H*-hydroxy-3-5-di-*tert*-amyllphenyl) benzotriazole, 2-(2-hydroxy-5-tertoctylphenyl) benzotriazole, 2-(2-hydroxy-5-methylphenyl) benzotriazole, 2,2'-methylenebis(6-(benzotriazol-2-yl)-4-*tert*-octylphenol), 3-(2*H*-benzotriazolyl)-5-(1,1-dimethylethyl)-4-hydroxy-benzenepropanoic acid octyl ester, bis(2,2,6,6-tetramethyl-4-piperidine) sebacate, bis(1,2,2,6,6-pentamethyl-4-piperidinyl) sebacate, bis(2,2,6,6-tetramethyl-4-piperidine) sebacate, butanedioic acid dimethylester polymer with 4-hydroxy-2,2,6,6-tetramethyl-1-piperidine ethanol, poly {[6-[(1,1,3,3-tetramethylbutyl) amino]-1,3,5-triazine-2,4-diyl][(2,2,6,6-tetramethyl-4-piperidinyl)imino]-1,6-hexanediyl[(2,2,6,6-tetramethyl-4-piperidinyl) imino]}, bis(1,2,2,6,6-pentamethyl-4-piperidinyl)-[[3,5-bis (1,1-dimethyethyl-4-hydroxyphenyl]methy]butylmalonate, 1,3,5-triazine-2,4,6-triamine, 2-(4,6-diphenyl-1,3,5-triazin-2-yl)-5-hexyloxy-phenol, and 2-(4,6-Bis(2,4-dimethyl-phenyl)-1,3,5-triazine-2-yl)-5-octyloxy phenol.

A photoinitiator is a compound that undergoes a photoreaction on absorption of light, producing reactive species, such as a cation or a free radical, whereas a UV absorber does not undergo a photoreaction upon absorption of light. A UV absorber is a compound that can absorb the energy of light and release this energy in the form of heat. Photoinitiators are capable of initiating or catalyzing chemical reactions that result in significant changes in the solubility and physical properties of suitable formulations. Hence, a photoinitiator is a compound that can transform the physical energy of light into suitable chemical energy in the form of reactive intermediates.

These changes are most commonly achieved by polymerization or polycondensation reactions. The process set off by a photoinitiator and light is called photopolymerization or radiation curing. It transforms a soluble liquid formulation into a hard and insoluble crosslinked polymer network. The cured coating is chemically and physically resistant and is used both to protect and decorate substrates such as plastics, wood and metal.

Radical polymerization of acrylate- or styrene-based formulations is the most widespread application so far, and a broad variety of radical photoinitiators has been developed. Most radiation curing is performed using near UV light (300-400 nm range), but initiators that extend into the visible, up to the infrared (IR) range, or on the blue side to the deep UV range are also available.

Cationic photoinitiators that produce either a Bronsted or Lewis acid are used as initiators for cationically polymerizing materials (e.g., epoxies) or for resins capable of undergoing crosslinking via polycondensation reactions.

### DETAILED DESCRIPTION

Various features and advantageous details are explained more fully with reference to the nonlimiting embodiments that are illustrated in the accompanying drawings and detailed in the following description. It should be understood, however, that the detailed description and the specific examples, while indicating embodiments of the invention, are given by way of illustration only, and not by way of limitation. Various substitutions, modifications, additions, and/or rearrangements will be apparent to those of ordinary skill in the art from this disclosure. In the following description, numerous specific details are provided to provide a thorough understanding of the disclosed embodiments. One of ordinary skill in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

Unhydrolyzed alkoxysilane monomer(s) together with multi-functional acrylate monomers are combined to form a radiation-curable formulation having good adhesion to both thermoplastic substrates such as polycarbonate and thermosets such as CR-39® (WO2013103334 to Essilor). However, adhesion to the high index ophthalmic thermoset resins based on thiourethanes is not robust because the right balance of alkoxysilane, acrylates, and photoinitiator levels is not achieved to obtain adhesion, either initally ("dry adhesion") or after ageing. Especially in accelerated UV ageing tests, interface between high-index substrates and UV cured hard coat photo-degrade, leading to poor adhesion. The present invention provides coating compositions for a broad range of ophthalmic lens substrates. The ratio of alkoxysilane and acrylate resins is first balanced. Cationic and free radical photoinitators may be added to the alkoxysilane/acrylate composition. An effective amount of a UV absorber is then added to protect the lens/coating interface from photodegradation to establish and maintain robust adhesion to all substrates with age.

Because thermoset substrates have hydroxyl functionality on their surface, it is preferred to incorporate cationically-cured epoxy resins and /or alkoxysilane resins for adhesion to these organic materials through a condensation reaction of the hydroxyl groups. Compositions with hydrolyzed or partially hydrolyzed alkoxysilane(s) can lead to premature condensation and formation of pre-polymers prior to use, yielding increased viscosity and instability of the composition. It is therefore a particular aspect of the invention to employ unhydrolyzed alkoxysilanes for stability. Incorporation of functionalized SiO₂ increases scratch and abrasion resistance, and the use of multi-functional acrylates promotes adhesion, tinting, and scratch resistance of the hard coating. Further incorporation of an effective amount of UV absorber is critical to establish and maintain adhesion in accelerated ageing tests to the higher index organic substrates.

### EXAMPLES

UV curable compositions have been prepared with the ingredients and amounts (weight percentages) as specified in Tables I, III, V and VII. Tables II, IV, VI, and VIII include the Q-Sun Adhesion results for lenses of various nature (Thermoplastic: Polycarbonate, thermoset: CR-39®, MR-7®, MR-8®, MR-1.74®) coated with these UV curable compositions. In addition, Table II includes abrasion resistance, scratch resistance, and haze for CR-39® lenses coated with these UV curable compositions.

The polyfuntional acrylate monomers and/or polyfunctional epoxy compounds were added one at a time to the glycidoxypropyltrimethoxysilane at ambient temperature and mixed until the solution was homogeneous. Next, Darocur 1173, Irgacure 819, UVI-6976 and UVI-6992 were added as photoinitiators and the mixture was again stirred until homogeneity. Finally, the fluorocarbon modified siloxane surfactant FC-4434, slip agent Ebecryl 1360, and UV absorber TINUVIN 1130 were added, and the final coating was mixed vigorously for 30 minutes to ensure homogeneity. The solutions were then allowed to stir gently using a magnetic stir bar until 5 all bubbles had disappeared. The coating solution was spin coated to the concave faces of CR®-39, MR-7®, MR-8®, MR-1.74® and polycarbonate (PC) lenses, and eventually to the convex faces (identified with convex in Table II) of CR®-39 and MR-8® lenses, using a Headway® spin coater (spin application speed: 800 rpm, application time: 10 seconds; coating spread speed: 1200 rpm, spread spin time: 8 seconds). The coated lenses were then submitted to UV curing in a Fusion Systems® 10 UV belt conveyor under the following conditions:
UV belt conveyor speed: 1.5 m/min (5 ft/min);
Fusion H⁺ bulb;
UV dosage: UV-A: 1.926 J/m², UV-B: 1.513 J/cm², UV-C: 0.327 J/cm², UV-V: 1.074J/cm²;
UV power: UV-A: 1.121 W/m², UV-B: 0.850 W/cm², UV-C: 0.180 W/cm²,
UV-V:0.602 W/cm².

Abrasion resistance is measured on CR®-39 coated lenses using the BAYER test carried out in accordance with standard ASTM F735.81. A high value in the BAYER test corresponds to a high degree of abrasion resistance.

Scratch resistance is measured on CR®-39 coated lenses using a hand steel wool (HSW) test as defined in EP0614957: Extra fine n° 000 STARWAX© steel wool was used. A piece of steel wool about 3 cm by 3 cm was folded on itself and used to make 10 to-and-fro rubbing movements on the coated lens in the fibre direction using a constant pressure throughout the operation. The lens was then rubbed with a dry cloth and rinsed with alcohol. The state of the lens was then estimated and classified as follows: 0: no observed scratching, / 1: lens very slightly scratched (0 to 5 scratches), / 2: lens slightly scratched (up to 20 scratches), / 3: lens somewhat scratched (up to 50 scratches), / 4: lens very scratched (more than 50 scratches), / 5: bare substrate.

HAZE value is measured on CR®-39 coated lenses by light transmission measurement using the Haze-Guard Plus© haze meter from BYK-Gardner (a color difference meter) according to the method of ASTM D1003-00, which is incorporated herein in its entirety by reference. All references to "haze" values in this application are by this standard. The instrument is first calibrated according to the manufacturer's instructions. Next, the sample is placed on the transmission light beam of the pre-calibrated meter, and the haze value is recorded from three different specimen locations and averaged.

Adhesion is evaluated using the crosshatch adhesion test carried out in accordance with standard ISTM 02-010. According to crosshatch test ISTM 02-010, a mark from 0 to 5 is given to the lens. With mark 0 or 1, the lens is acceptable (passes), whereas marks 2 to 5 are not acceptable (does not pass). The adhesion of the different hard-coat formulations was then evaluated on the various substrates in various conditions:
without specific conditioning of the lenses (test called "dry adhesion")
after having submitted the lenses to UV ageing for 2 periods of time of 40h .

Q-SUN is performed in a xenon test chamber Q-SUN® Xe-3 from Q-LAB at a relative humidity of 20% (± 5%) and at a temperature of 23°C (± 5°C). The lens is introduced in the chamber and the tested side is exposed to the light. The lens is exposed to UV during 40h and then subjected to the crosshatch test. According to crosshatch test ISTM 02-010, a mark from 0 to 5 is given to the lens. With mark 0 or 1, the lens is acceptable (passes), whereas marks 2 to 5 are not acceptable (does not pass). If the lens passed the test, it was subjected again to 40h UV exposure.

Tintability was evaluated on PC lenses. A surfaced semi-finished PC lens having a non-tintable coating on the convex side was coated on the concave side with the UV coating and cures. The polycarbonate lenses were submerged into a bath of BPI black dye at 92 °C for 15 minutes. Afterwards, the lenses were washed and light transmission properties, measured by means of a spectrophotometer, were read.

**Table I - Universal Hard Coat Formulations**

| **UV Hard Coat for 1.60 (MR-8), 1.67 (MR-7), 1.74 (MR-1.74), PC, & CR-39** | | | | |
|---|---|---|---|---|
| | | **Ex 1** | **Ex 2** | **Ex 3** |
| **COMPONENT** | **Material Type** | **%** | **%** | **%** |
| Glycidoxypropyltrimethoxysilane | Epoxysilane | 19.98 | 24.67 | 31.52 |
| Vinyltrimethoxy silane | Vinylsilane | 7.99 | 7.19 | 7.65 |
| Trimethylolpropanetriglycidylether | Aliphatic epoxy | 23.99 | 19.97 | 18.52 |
| C-150 (50% SiO2 in TMPTA) | SiO2 dispersed in acrylate | --- | 10.19 | 10.90 |
| 1,6 Hexanedioldiacrylate | Difunctional acrylate | 12.87 | 8.26 | 4.56 |
| Dipentaerythritolhexaacrylate | Multifunctional acrylate | 25.85 | 20.66 | 17.45 |
| Triarylsulfoniumhexafluoroantimonate (50% in propylene carbonate - UVI-6992) | Cationic initiator | 0.58 | 0.61 | 0.66 |
| Triarylsulfoniumhexafluorophosphate (50% in propylene carbonate - UVI-6976) | Cationic initiator | 1.74 | 1.82 | 1.99 |
| 2-Hydroxy-2-methyl-1-phenyl-1-propanone | Free radical initiator | 0.69 | 1.01 | 0.85 |
| Phenylbis(2,4,6-trimethylbenzoyl)-phosphine oxide | Free radical initiator | 0.174 | 0.25 | 0.21 |
| TINUVIN 1130 | UV absorber | 4.873 | 3.97 | 4.38 |
| Acrylated silicone slip agent | Slip agent | 0.864 | 0.81 | 0.89 |
| Fluorosurfactant FC-4434 | surfactant | 0.386 | 0.64 | 0.43 |
| Total | | 100.0 | 100 | 100.0 |

**Table II Q-Sun Adhesion Testing**

| **MR-1.74** | **Ex 1** | **Ex 2** | **Ex 3** |
|---|---|---|---|
| DRY ADHESION | Pass | Pass | Pass |
| Q-SUN 40HRS | Pass | Pass | Pass |
| Q-SUN 80HRS | Pass | Pass | Pass |

| **MR-7** | | | |
|---|---|---|---|
| DRY ADHESION | Pass | Pass | Pass |
| Q-SUN 40HRS | Pass | Pass | Pass |
| Q-SUN 80HRS | Pass | Pass | Pass |

| **PC** | | | |
|---|---|---|---|
| DRY ADHESION | Pass | Pass | Pass |
| Q-SUN 40HRS | Pass | Pass | Pass |
| Q-SUN 80HRS | Pass | Pass | Pass |

| **MR-8 convex** | | | |
|---|---|---|---|
| DRY ADHESION | Pass | Pass | Pass |
| Q-SUN 40HRS | Pass | Pass | Pass |
| Q-SUN 80HRS | Pass | Pass | Pass |

| **CR-39** | | | |
|---|---|---|---|
| DRY ADHESION | Pass | Pass | Pass |
| Q-SUN 40HRS | Pass | Pass | Pass |
| Q-SUN 80HRS | Pass | Pass | Pass |

| **CR-39 convex** | | | |
|---|---|---|---|
| DRY ADHESION | Pass | Pass | Pass |
| Q-SUN 40HRS | Pass | Pass | Pass |
| Q-SUN 80HRS | Pass | Pass | Pass |

| **Mechanical Perf. (on CR-39)** | **Ex 1** | **Ex 2** | **Ex 3** |
|---|---|---|---|
| Sand Bayer | 1.13 | 1.33 | 1.51 |
| ASTM Haze | 0.13 | 0.18 | 0.19 |
| Trans. AVL | 92.6 | 91.70 | 92.6 |
| Hand Steel Wool | 5 | 5 | 5 |
| Thickness of cured film | 3.65 µm | 7.73 µm | 7.33 µm |

**Tables I and Table II Conclusions:** The three solutions exhibit good adhesion before and after Q-Sun. When the formulation comprise SiO₂ (Ex 2 and Ex 3), abrasion resistance improved (increased Bayer) without loss of adhesion performance. The trials demonstrate that the formulation may optionally comprise a colloidal silica (SiO₂ in TMPTA) (trimethylolpropanetriacrylate) in place of TMPTA alone (for example). The inclusion of a colloidal silica is preferred for improved adhesion and abrasion resistance.

**Table III - Effect of Silane and UV absorber**

| | **Ex 2** | **Ex 4** | **Ex 5** | **Ex 6** |
|---|---|---|---|---|
| | **CONTROL** | **100% epoxy silane** | **100% vinyl silane** | **No UV absorber** |
| **COMPONENT** | **%** | **%** | **%** | **%** |
| Glycidoxypropyltrimethoxysilane | 24.7 | 31.8 | --- | 25.7 |
| Vinyltrimethoxy silane | 7.2 | --- | 32.1 | 7.5 |
| Trimethylolpropanetriglycidylether | 20.0 | 19.9 | 20.1 | 20.8 |
| C-150 (SiO2 dispersed in trimethylolpropanetriacrylate | 10.2 | 10.2 | 10.3 | 10.6 |
| 1,6 hexanedioldiacrylate | 8.3 | 8.2 | 8.3 | 8.6 |
| Dipentaerythritol hexaacrylate | 20.7 | 20.6 | 20.8 | 21.5 |
| UVI-6976 | 1.8 | 2.1 | 0.8 | 1.9 |
| UVI-6992 | 0.6 | 0.7 | 0.3 | 0.6 |
| Darocur 1173 | 1.0 | 0.8 | 1.6 | 1.1 |
| Irgacure 819 | 0.3 | 0.2 | 0.4 | 0.3 |
| TINUVIN 1130 (UV absorber) | 4.0 | 4.0 | 4.0 | --- |
| EB-1360 | 0.8 | 0.8 | 0.8 | 0.9 |
| FC4434 | 0.6 | 0.6 | 0.6 | 0.7 |
| Total | 100.0 | 100.0 | 100.0 | 100.0 |

**Table IV - Q-Sun Adhesion**

| | **Ex 2** | **Ex 4** | **Ex 5** | **Ex 6** |
|---|---|---|---|---|
| **MR-1.74** | **CONTROL** | **100% epoxy silane** | **No epoxy silane** | **No UV absorber** |
| DRY ADHESION | PASS | PASS | PASS | PASS |
| Q-SUN 40HRS | PASS | PASS | PASS | FAIL |
| Q-SUN 80HRS | PASS | PASS | PASS | FAIL |

| **MR-7** | | | | |
|---|---|---|---|---|
| DRY ADHESION | PASS | PASS | FAIL | PASS |
| Q-SUN 40HRS | PASS | PASS | FAIL | PASS |
| Q-SUN 80HRS | PASS | PASS | FAIL | FAIL |

| **PC** | | | | |
|---|---|---|---|---|
| DRY ADHESION | PASS | PASS | PASS | PASS |
| Q-SUN 40HRS | PASS | PASS | PASS | PASS |
| Q-SUN 80HRS | PASS | PASS | PASS | PASS |

| **MR-8** | | | | |
|---|---|---|---|---|
| DRY ADHESION | PASS | PASS | PASS | PASS |
| Q-SUN 40HRS | PASS | PASS | FAIL | FAIL |
| Q-SUN 80HRS | PASS | PASS | FAIL | FAIL |

| **CR-39** | | | | |
|---|---|---|---|---|
| DRY ADHESION | PASS | PASS | FAIL | PASS |
| Q-SUN 40HRS | PASS | PASS | FAIL | PASS |
| Q-SUN 80HRS | PASS | PASS | FAIL | PASS |

**Tables III and IV Conclusions:** Ex 6 is a control with no UV absorber that demonstrates the role of UV absorber in improved adhesion. These comparative data demonstrate that the presence of epoxysilane and UV absorber are mandatory for obtaining a UV coating able to adhere to all substrates before ageing and after ageing.

**Table V - Effect of Silane Ratio on Adhesion**

| | **Ex 2** | **Ex 7** | **Ex 8** | **Ex 9** |
|---|---|---|---|---|
| **COMPONENT** | **%** | **%** | **%** | **%** |
| Glycidoxypropyltrimethoxysilane | 24.7 | 19.1 | 12.8 | 5.7 |
| Vinyltrimethoxy silane | 7.2 | 12.8 | 19.2 | 26.3 |
| Trimethylolpropanetriglycidylether | 20.0 | 20.0 | 20.0 | 20.1 |
| C-150 (SiO₂ dispersed in trimethylolpropanetriacrylate) | 10.2 | 10.2 | 10.2 | 10.2 |
| 1,6 hexanedioldiacrylate | 8.3 | 8.3 | 8.3 | 8.3 |
| Dipentaerythritol hexaacrylate | 20.7 | 20.7 | 20.7 | 20.8 |
| UVI-6976 | 1.8 | 1.7 | 1.3 | 1.1 |
| UVI-6992 | 0.6 | 0.6 | 0.4 | 0.4 |
| Darocur 1173 | 1.0 | 1.1 | 1.3 | 1.4 |
| Irgacure 819 | 0.3 | 0.3 | 0.3 | 0.4 |
| TINUVIN 1130 | 4.0 | 4.0 | 4.0 | 4.0 |
| EB-1360 | 0.8 | 0.8 | 0.8 | 0.8 |
| FC4434 | 0.6 | 0.6 | 0.6 | 0.6 |
| Total | 100.0 | 100.1 | 100.0 | 100.0 |

**Table VI Q-Sun Adhesion**

| **MR-1.74** | **Ex 2** | **Ex 7** | **Ex 8** | **Ex 9** |
|---|---|---|---|---|
| DRY ADHESION | PASS | PASS | PASS | PASS |
| Q-SUN 40HRS | PASS | PASS | PASS | PASS |
| Q-SUN 80HRS | PASS | PASS | PASS | PASS |

| **MR-7** | | | | |
|---|---|---|---|---|
| DRY ADHESION | PASS | PASS | PASS | PASS |
| Q-SUN 40HRS | PASS | PASS | PASS | PASS |
| Q-SUN 80HRS | PASS | PASS | PASS | PASS |

| **PC** | | | | |
|---|---|---|---|---|
| DRY ADHESION | PASS | PASS | PASS | PASS |
| Q-SUN 40HRS | PASS | PASS | PASS | PASS |
| Q-SUN 80HRS | PASS | PASS | PASS | PASS |

| **MR-8** | | | | |
|---|---|---|---|---|
| DRY ADHESION | PASS | PASS | PASS | PASS |
| Q-SUN 40HRS | PASS | PASS | PASS | PASS |
| Q-SUN 80HRS | PASS | PASS | PASS | PASS |

| **CR-39** | | | | |
|---|---|---|---|---|
| DRY ADHESION | PASS | PASS | PASS | PASS |
| Q-SUN 40HRS | PASS | PASS | PASS | PASS |
| Q-SUN 80HRS | PASS | PASS | PASS | PASS |

**Tables V and VI Conclusions**: If a component such as VTMS is used in the formulation, the epoxysilane should represent at least 5% of the total weight of the formulation to obtain the requisite property of adhesion.

**Table VII - Silane Ratio and UV Absorber Effect on Adhesion and Tinting**

| | **Ex 1** | **Ex 10** | **Ex 11** | **Ex 12** | **Ex 13** |
|---|---|---|---|---|---|
| **COMPONENT** | **%** | **%** | **%** | **%** | **%** |
| Glycidoxypropyltrimethoxysilane | 19.98 | 27.97 | 13.98 | 7.99 | 21.01 |
| Vinyltrimethoxy silane | 7.99 | --- | 13.98 | 19.98 | 8.40 |
| Trimethylolpropanetriglycidylether | 23.99 | 23.99 | 23.99 | 23.99 | 25.22 |
| 1,6 hexanedioldiacrylate | 12.87 | 12.87 | 12.87 | 12.87 | 13.54 |
| Dipentaerythritol hexaacrylate | 25.85 | 25.85 | 25.85 | 25.85 | 27.18 |
| UVI-6976 | 1.74 | 1.74 | 1.74 | 1.74 | 1.83 |
| UVI-6992 | 0.58 | 0.58 | 0.58 | 0.58 | 0.61 |
| Darocur 1173 | 0.69 | 0.69 | 0.69 | 0.69 | 0.73 |
| Irgacure 819 | 0.173 | 0.17 | 0.17 | 0.17 | 0.182 |
| TINUVIN 1130 | 4.873 | 4.87 | 4.87 | 4.87 | --- |
| EB-1360 | 0.864 | 0.86 | 0.86 | 0.86 | 0.908 |
| FC4434 | 0.389 | 0.39 | 0.39 | 0.39 | 0.405 |
| Total | 100.0 | 100.0 | 100.0 | 100.0 | 100.0 |

**Table VIII - Q-Sun Adhesion**

| **MR-1.74** | **Ex 1** | **Ex 10** | **Ex 11** | **Ex 12** | **Ex 13** |
|---|---|---|---|---|---|
| DRY ADHESION | PASS | PASS | PASS | PASS | PASS |
| Q-SUN 40HRS | PASS | PASS | PASS | PASS | FAIL |
| Q-SUN 80HRS | PASS | PASS | PASS | PASS | FAIL |

| **MR-7** | | | | | |
|---|---|---|---|---|---|
| DRY ADHESION | PASS | PASS | PASS | PASS | PASS |
| Q-SUN 40HRS | PASS | PASS | PASS | PASS | FAIL |
| Q-SUN 80HRS | PASS | PASS | PASS | PASS | FAIL |

| **PC** | | | | | |
|---|---|---|---|---|---|
| DRY ADHESION | PASS | PASS | PASS | PASS | PASS |
| Q-SUN 40HRS | PASS | PASS | PASS | PASS | PASS |
| Q-SUN 80HRS | PASS | PASS | PASS | PASS | PASS |

| **MR-8** | | | | | |
|---|---|---|---|---|---|
| DRY ADHESION | PASS | PASS | PASS | PASS | PASS |
| Q-SUN 40HRS | PASS | PASS | PASS | PASS | PASS |
| Q-SUN 80HRS | PASS | PASS | PASS | PASS | FAIL |

| **CR-39** | | | | | |
|---|---|---|---|---|---|
| DRY ADHESION | PASS | PASS | PASS | PASS | PASS |
| Q-SUN 40HRS | PASS | PASS | PASS | PASS | PASS |
| Q-SUN 80HRS | PASS | PASS | PASS | PASS | PASS |

**Tables VII and VIII Conclusions:** Ex 13 is a control with no UV absorber that demonstrates the role of UV absorber in improved adhesion. Tables VII and VIII include variations of the silane ratio and UV absorber. Relating to adhesion, formulations Ex 10 to Ex 13 provide the same result as mentioned in Table III: UV absorber is mandatory to obtain adhesion to all substrates, more particularly for high refractive index substrates: 1.74 (MR-1.74®, based on episulfide monomers), 1.67 (MR-7® polythiourethane) and 1.6 (MR-8® polythiourethane). If SiO₂ is not present, there is no impact on the adhesion property.

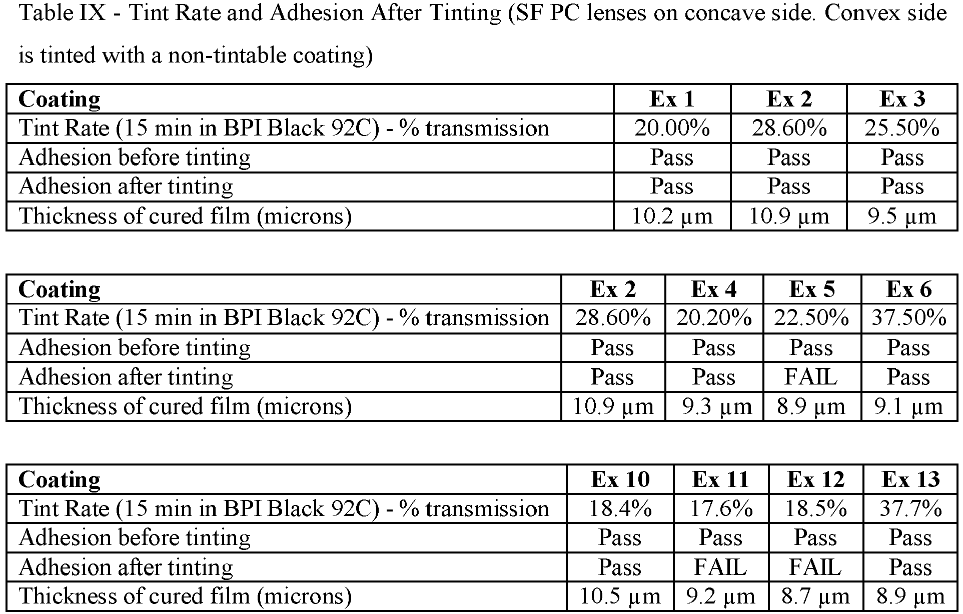

**Table IX Conclusions:** As can be seen in Table IX above, the silane ratio can influence the adhesion of the hard coating after tinting, and the UV absorber acts as a tint enhancer. Ex 6 and Ex 13 include no UV absorber and pass on PC lenses. Ex 5 includes no epoxysilane. Ex 11 and 12 include a lower amount of epoxysilane: adhesion is within acceptable limits without tinting, but decreased after tinting

The claims are not to be interpreted as including means-plus- or step-plus-function limitations, unless such a limitation is explicitly recited in a given claim using the phrase(s) "means for" or "step for," respectively.

## Claims

1. A UV curable coating composition for ophthalmic lenses comprising:
a) at least one epoxy alkoxysilane;
b) at least one polyfunctional acrylate monomer and/or polyfunctional epoxy compound, different from a); and
c) at least one UV absorber.

2. The composition of claim 1 wherein the at least one epoxy alkoxysilane is a non-hydrolyzed epoxy alkoxysilane.

3. The composition of claim 1 or claim 2 wherein the total amount of UV absorber is 2 wt. % or more of total dry matter of the composition.

4. The composition of any of claims 1 to 3, wherein the total amount of UV absorber ranges from 3 to 10 wt. % of the total dry matter of the composition especially from 3 to 6 wt. % of the total dry matter of the composition.

5. The composition of any of claims 1 to 4, wherein
the total amount of a) ranges from 3 to 58 wt. % of total dry matter of the composition; and
the total amount of b) is 40 wt. % or more of total dry matter of the composition.

6. The composition of any of claims 1 to 5, further comprising a vinylalkoxysilane, especially vinyltrimethoxysilane.

7. The composition of any of claims 1 to 6, wherein a molar ratio of a total amount of epoxy functional groups to a total amount of acrylate functional groups is from 0.1 to 3.

8. The composition of any of claims 1 to 7, wherein the UV absorber a triazole, a triazine, a benzophenone, an oxazole, a thiazole, a metal oxide, a metal dioxide, a salicylate ester, a cinnamate ester, *p*-aminobenzoic acid, a *p*-aminobenzoate derivative, or combinations thereof.

9. A method for manufacturing UV-cured hard-coated substrate comprising combining in a mixture:
a) at least one epoxy alkoxysilane;
b) at least one polyfunctional acrylate monomer and/or polyfunctional epoxy compound, different from a); and
c) at least one UV absorber;
coating a substrate with said mixture; and
curing said coating with UV light.

10. The method of claim 9, wherein the at least one epoxy alkoxysilane is a non-hydrolyzed epoxy alkoxysilane.

11. The method of claim 9 or claim 10, wherein the method does not comprise a hydrolysis step before the UV curing step.

12. A UV-cured hard-coated ophthalmic lens comprising
a substrate;
a hard coat obtained by UV-curing a composition according to any one of claim 1 to claim 8.

13. A UV-cured hard-coated ophthalmic lens of claim 12 wherein the substrate is an organic, mineral or composite optical substrate.

14. A UV-cured hard-coated composite ophthalmic lens of claim 13 wherein the main front face of the substrate and the main rear face of the substrate are made of different organic polymers.

15. A UV-cured hard-coated ophthalmic lens of claim 13 or claim 14 wherein said substrate comprises a polythiourethane based polymer.

## Patentansprüche

1. UV-härtbare Beschichtungszusammensetzung für ophthalmische Linsen, umfassend:
a) mindestens ein Epoxyalkoxysilan,
b) mindestens ein polyfunktionelles Acrylatmonomer und/oder mindestens eine polyfunktionelle Epoxyverbindung, die von a) verschieden ist, und
c) mindestens einen UV-Absorber

2. Zusammensetzung nach Anspruch 1, wobei es sich bei dem mindestens einen Epoxyalkoxysilan um ein nichthydrolysiertes Epoxyalkoxysilan handelt.

3. Zusammensetzung nach Anspruch 1 oder Anspruch 2, wobei die Gesamtmenge an UV-Absorber 2 Gew.-% oder mehr der Gesamttrockenmasse der Zusammensetzung beträgt.

4. Zusammensetzung nach einem der Ansprüche 1 bis 3, wobei die Gesamtmenge an UV-Absorber im Bereich von 3 bis 10 Gew.-% der Gesamttrockenmasse der Zusammensetzung, insbesondere von 3 bis 6 Gew.-% der Gesamttrockenmasse der Zusammensetzung, liegt.

5. Zusammensetzung nach einem der Ansprüche 1 bis 4, wobei
die Gesamtmenge von a) im Bereich von 3 bis 58 Gew.-% der Gesamttrockenmasse der Zusammensetzung liegt und
die Gesamtmenge an b) 40 Gew.-% oder mehr der Gesamttrockenmasse der Zusammensetzung beträgt.

6. Zusammensetzung nach einem der Ansprüche 1 bis 5, welche weiter ein Vinylalkoxysilan, insbesondere Vinyltrimethoxysilan, umfasst.

7. Zusammensetzung nach einem der Ansprüche 1 bis 6, wobei ein Molverhältnis einer Gesamtmenge an funktionellen Epoxygruppen zu einer Gesamtmenge an funktionellen Acrylatgruppen 0,1 bis 3 beträgt.

8. Zusammensetzung nach einem der Ansprüche 1 bis 7, wobei es sich bei dem UV-Absorber um ein Triazol, ein Triazin, ein Benzophenon, ein Oxazol, ein Thiazol, ein Metalloxid, ein Metalldioxid, einen Salicylatester, einen Cinnamatester, p-Aminobenzoesäure, ein *p-*Aminobenzoatderivat oder Kombinationen davon handelt.

9. Verfahren zur Herstellung eines UV-gehärteten hartbeschichteten Substrats, bei dem man:
a) mindestens ein Epoxyalkoxysilan,
b) mindestens ein polyfunktionelles Acrylatmonomer und/oder mindestens eine polyfunktionelle Epoxyverbindung, die von a) verschieden ist, und
c) mindestens einen UV-Absorber
in einer Mischung zusammengibt,
ein Substrat mit der Mischung beschichtet und
die Beschichtung mit UV-Licht härtet.

10. Verfahren nach Anspruch 9, wobei es sich bei dem mindestens einen Epoxyalkoxysilan um ein nichthydrolysiertes Epoxyalkoxysilan handelt.

11. Verfahren nach Anspruch 9 oder Anspruch 10, wobei das Verfahren keinen Hydrolyseschritt vor dem UV-Härtungsschritt umfasst.

12. UV-gehärtete hartbeschichtete ophthalmische Linse, umfassend:
ein Substrat,
eine harte Beschichtung, erhalten durch UV-Härtung einer Zusammensetzung nach einem der Ansprüche 1 bis 8.

13. UV-gehärtete hartbeschichtete ophthalmische Linse nach Anspruch 12, wobei es sich bei dem Substrat um ein organisches, mineralisches oder gemischtes optisches Substrat handelt.

14. UV-gehärtete hartbeschichtete ophthalmische Verbundlinse nach Anspruch 13, wobei die Hauptvorderseite des Substrats und die Hauptrückseite des Substrats aus unterschiedlichen organischen Polymeren hergestellt sind.

15. UV-gehärtete hartbeschichtete ophthalmische Linse nach Anspruch 13 oder Anspruch 14, wobei das Substrat ein Polymer auf Polythiourethanbasis umfasst.

## Revendications

1. Composition de revêtement durcissable par UV destinée à des verres ophtalmiques, comprenant :
a) au moins un époxyalcoxysilane ;
b) au moins un monomère d'acrylate polyfonctionnel et/ou un composé d'époxy polyfonctionnel, différent du a) ; et
c) au moins un absorbeur d'UV.

2. Composition de la revendication 1, dans laquelle l'au moins un époxyalcoxysilane est un époxyalcoxysilane non hydrolysé.

3. Composition de la revendication 1 ou la revendication 2, dans laquelle la quantité totale d'absorbeur d'UV est de 2% en poids ou plus de la matière sèche totale de la composition.

4. Composition de l'une quelconque des revendications 1 à 3, dans laquelle la quantité totale d'absorbeur d'UV est comprise dans la gamme des 3 à 10% en poids de la matière sèche totale de la composition, particulièrement de 3 à 6% en poids de la matière sèche totale de la composition.

5. Composition de l'une quelconque des revendications 1 à 4, dans laquelle
la quantité totale de a) est comprise dans la gamme des 3 à 58% en poids de la matière sèche totale de la composition ;
et
la quantité totale de b) est de 40% en poids ou plus de la matière sèche totale de la composition.

6. Composition de l'une quelconque des revendications 1 à 5 comprenant en outre un alcoxysilane vinylique, particulièrement un triméthoxysilane vinylique.

7. Composition de l'une quelconque des revendications 1 à 6, dans laquelle un rapport molaire d'une quantité totale de groupes époxy fonctionnels sur une quantité totale de groupes acrylate fonctionnels est de 0,1 à 3.

8. Composition de l'une quelconque des revendications 1 à 7, dans laquelle l'absorbeur d'UV est un triazole, une triazine, une benzophénone, un oxazole, un thiazole, un oxyde de métal, un dioxyde de métal, un ester salicylique, un ester cinnamique, l'acide *p-*amino-benzoïque, un dérivé de p-amino-benzoate ou des combinaisons de ceux-ci.

9. Procédé destiné à fabriquer un substrat à revêtement dur durci par UV, comprenant les étapes consistant à
combiner dans un mélange :
a) au moins un époxyalcoxysilane ;
b) au moins un monomère d'acrylate polyfonctionnel et/ou un composé d'époxy polyfonctionnel, différent du a) ; et
c) au moins un absorbeur d'UV ;
enduire un substrat avec ledit mélange ; et
durcir ledit revêtement avec une lumière UV.

10. Procédé de la revendication 9, dans lequel l'au moins un époxyalcoxysilane est un époxyalcoxysilane non hydrolysé.

11. Procédé de la revendication 9 ou la revendication 10, le procédé ne comprenant pas d'étape d'hydrolyse avant l'étape de durcissement par UV.

12. Verre ophtalmique à revêtement dur durci par UV comprenant
un substrat ;
un revêtement dur, obtenu en durcissant par UV une composition selon l'une quelconque de la revendication 1 à la revendication 8.

13. Verre ophtalmique à revêtement dur durci par UV de la revendication 12, dans lequel le substrat est un substrat optique organique, minéral ou composite.

14. Verre ophtalmique composite à revêtement dur durci par UV de la revendication 13, dans lequel la face avant principale du substrat et la face arrière principale du substrat sont faites de différents polymères organiques.

15. Verre ophtalmique à revêtement dur durci par UV de la revendication 13 ou la revendication 14, dans lequel ledit substrat comprend un polymère à base de polythiouréthane.
